# EUROPEAN PATENT APPLICATION

(11) **EP 4 112 292 A1**
(43) Date of publication of application: **04.01.2023**
(21) Application number: 22181412.2
(22) Date of filing: 28.06.2022
(51) Int. Cl.: B32B 5/12, B32B 3/26, B32B 5/02, B32B 5/26, B32B 7/022, B32B 7/03, B32B 7/12, H04M 1/02

(54) **SUPPORT SHEET, FLEXIBLE DISPLAY SCREEN AND ELECTRONIC DEVICE**

(30) Priority: 30.06.2021 CN 202110738285
(71) Applicant: GUANGDONG OPPO MOBILE TELECOMMUNICATIONS CORP., LTD., Dongguan, Guangdong 523860 (CN)
(72) Inventor: GONG, Heqing, Dongguan, 523860 (CN); ZHANG, Yanbin, Dongguan, 523860 (CN)
(74) Representative: Manitz Finsterwald Patent- und Rechtsanwaltspartnerschaft mbB

(57) **Abstract**

Provided in the embodiments of the present disclosure are a support sheet (30) for supporting a flexible display screen (100,300), a flexible display screen (100,300) and an electronic device (1000). The support sheet (30) includes a carbon fiber substrate (31) and an epoxy resin adhesive (32). The carbon fiber substrate (31) includes first carbon fibers in a first direction and a second carbon fibers in a second direction, and the first direction being different from and angled with the second direction. Epoxy resin adhesive (32) for holding the first and the second carbon fibers in the carbon fiber substrate (31).

## Description

### TECHNICAL FIELD

The present disclosure relates to the technical field of flexible display screens and, more particularly, to a support sheet, a flexible display screen and an electronic device.

### BACKGROUND

Electronic devices with flexible display screens, such as foldable mobile phones, can be bent, folded or even rolled. In order to facilitate the display area of the flexible display screen to realize changes and reduce the thickness of the flexible display screen as much as possible, the thickness of the flexible display screen, especially the support plate under the screen, needs to be very thin. However, if the thickness of the screen display support plate is too thin, the flexible circuit board in the flexible display screen is easily impacted by external forces during bending, which affects the reliability of the flexible display screen.

### SUMMARY

Provided in the embodiments of the present disclosure is a support sheet for a flexible display screen. The support sheet includes a carbon fiber substrate. The carbon fiber substrate comprises first carbon fibers in a first direction and second carbon fibers in a second direction, the first direction being different from and angled with the second direction; and epoxy resin adhesive for holding the first and the second carbon fibers in the carbon fiber substrate.

Provided in another aspect of the present disclosure is a flexible display screen, including a flexible display panel, a support sheet and a flexible circuit board. The support sheet is disposed on a non-display surface of the flexible display panel. One end of the flexible circuit board is electrically connected to the flexible display panel, and the opposite end of the flexible circuit board is attached to a side of the support sheet away from the flexible display panel. The support sheet includes a carbon fiber substrate, and the carbon fiber substrate includes first carbon fibers in a first direction and second carbon fibers in a second direction, the first direction being different from and angled with the second direction.

Provided in a further aspect of the present disclosure is an electronic device, including a flexible display panel, a support sheet, a flexible circuit board and a main board. The support sheet disposed on the non-display surface of the flexible display panel. One end of the flexible circuit board is electrically connected to the flexible display panel, and the opposite end is attached to the side of the support sheet away from the flexible display panel. The flexible display panel is electrically connected to the main board through the flexible circuit board. The support sheet includes a carbon fiber substrate, and the carbon fiber substrate includes first carbon fibers in a first direction and second carbon fibers in a second direction; the first direction being different from and angled with the second direction.

### BRIEF DESCRIPTION OF THE DRAWINGS

In order to illustrate the technical solutions in the embodiments of the present disclosure more clearly, the following briefly introduces the drawings that are used in the description of the embodiments.
FIG.1 is a schematic illustration of an electronic device according to some embodiments of the present disclosure.
FIG.2 is a schematic cross-sectional view of the electronic device shown in FIG. 1 taken along the line A-A.
FIG.3 is a schematic bottom view of a flexible display screen of an electronic device in the related art.
FIG. 4 is a schematic cross-sectional view of the flexible display screen shown in FIG.3 taken along the line B-B.
FIG.5 is an enlarged view of the area A shown in Fig.4.
FIG.6 is a schematic bottom view of the flexible display screen in the electronic device as shown in Fig.2.
FIG. 7 is a schematic cross-sectional view of the flexible display screen shown in FIG.6, taken along the line C-C.
FIG. 8 is an enlarged view of the area B shown in Fig.7.
FIG.9 is a schematic cross-sectional view of an embodiment of a support sheet in the flexible display screen shown in FIG.6, taken along the line D-D.
FIG.10 is a schematic cross-sectional view of another embodiment of the support sheet in the flexible display screen shown in FIG.6, taken along the line D-D.
FIG.11 is a schematic cross-sectional view of another embodiment of the support sheet in the flexible display screen shown in FIG.6, taken along the line D-D.
FIG.12 is a schematic cross-sectional view of another embodiment of the support sheet in the flexible display screen shown in FIG.6, taken along the line D-D.
FIG. 13 is a schematic cross-sectional view of another embodiment of the support sheet in the flexible display screen shown in FIG.6, taken along the line D-D.
FIG.14 is a schematic cross-sectional view of a flexible display screen provided by another embodiment of the present disclosure.
Fig.15 is a schematic enlarged view of the area C shown in Fig. 13. and
FIG.16 is a schematic structural view of an electronic device provided by an embodiment of the present disclosure.

### DETAILED DESCRIPTION

Embodiments of the present disclosure will be further described in detail below with reference to the accompanying drawings. It is particularly pointed out that the following examples are only used to illustrate the present disclosure, but do not limit the scope of the present disclosure. Similarly, the following embodiments are only some of the embodiments of the present disclosure, but not all of the embodiments, and all other embodiments obtained by those of ordinary skill in the art without creative work fall within the protection scope of the present disclosure.

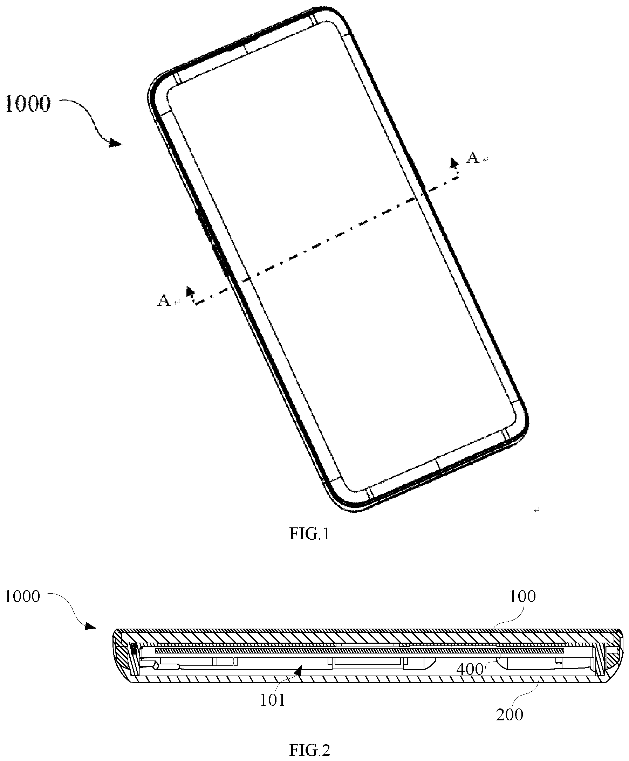

Please refer to FIG. 1, which is a schematic illustration of an electronic device according to some embodiments of the present disclosure. The present disclosure provides an electronic device 1000. The electronic device 1000 may be any one of various types of computer system devices that are mobile or portable and capable of wireless communication (one form is exemplarily shown in FIG.1). The electronic device 1000 may be a mobile phone or smart phone, a portable gaming device (e.g. Nintendo DS TM, PlayStation Portable TM, Gameboy Advance TM, iPhone TM), laptop, PDAs, portable Internet devices, music players and data storage devices, other handheld devices or headphones.

Electronic device 1000 may also be any of a number of electronic devices including, but not limited to, cellular phones, smart phones, other wireless communication devices, personal digital assistants, audio players, other media players, music recorders , video recorders, other media recorders, radios, medical equipment, vehicle transportation instruments, calculators, programmable remote controls, pagers, laptops, desktop computers, printers, netbooks, personal digital assistants (PDAs), portable multimedia players Video Players (PMP), Moving Picture Experts Group (MPEG-1 or MPEG-2) Audio Layer 3 (MP3) players, portable medical devices, and digital cameras and combinations thereof.

In some cases, the electronic device 1000 may perform various functions e.g. play music, display video, store pictures, and receive and send phone calls. Electronic device 1000 may be a device such as a cellular phone, media player, other handheld device, wristwatch device, pendant device, handset device, or other compact portable device.

Please refer to FIG.2, which is a schematic cross-sectional view of the electronic device 1000 shown in FIG.1 taken along the line A-A. The electronic device 1000 may include a flexible display screen 100 and a housing 200. The flexible display screen 100 is connected to the housing 200 and is enclosed with the housing 200 to form an accommodating space 101 for accommodating batterie, a main board 400 and other component.

It should be noted that the terms "first", "second" and "third" in this disclosure are used for description purposes only, and should not be interpreted as indicating or implying relative importance or indicating the number of the indicated technical features. Thus, a feature defined as "first", "second", "third" may expressly or implicitly include at least one of that feature. In the description of the present disclosure, "a plurality of" means at least two, such as two, three, etc., unless otherwise expressly and specifically defined.

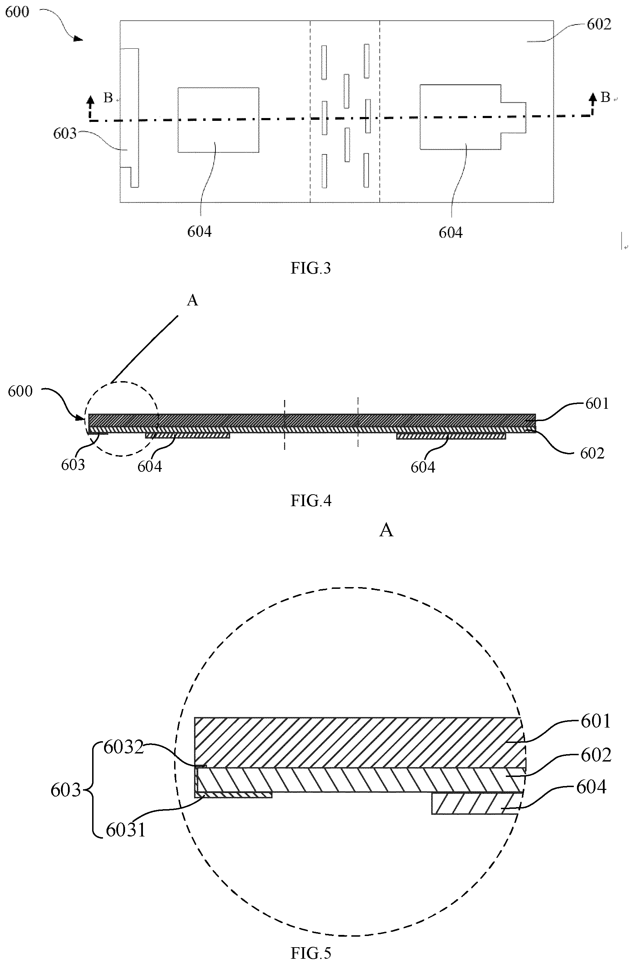

Please refer to FIGS.3 to 5, FIG. 3 is a schematic bottom view of a flexible display screen of an electronic device in the related art, FIG. 4 is a schematic cross-sectional view of the flexible display screen shown in FIG. 3 taken along the line B-B, and FIG. 5 is an enlarged view of the area A shown in Fig. 4.

In the related art, a flexible display screen 600 may include a flexible display panel 601, an under-screen support plate 602, a flexible circuit board 603 and a heat sink 604. The flexible display panel 601, the under-screen support plate 602 and the heat sink 604 are stacked in sequence. The flexible circuit board 603 includes a first connecting portion 6031 and a second connecting portion 6032 that are arranged in parallel and spaced apart. The first connecting portion 6031 is attached to the surface of the under-screen support plate 602 away from the flexible display panel 601 for electrically connected to the main board 400 of the electronic device 1000. The second connection section 6032 is located between the flexible display panel 601 and the under-screen support plate 602, and the second connection section 6032 is electrically connected to the flexible display panel 601 for supplying power to the flexible display panel 601.

It can be understood that the under-screen support plate 602 is located between the flexible display panels 601. On the one hand, it is used to support the flexible display panel 601, so that the flexible display panel 601 is evenly stressed, and on the other hand, it is used to protect the flexible circuit board 603 attached to the surface of the under-screen support board 602. The flexible circuit board 603 is used to connect the flexible display panel 601 and the main board 400 of the electronic device 1000, so that the main board 400 can transmit signals to the flexible display panel 601 or receive signals fed back by the flexible display panel 601. The heat sink 604 is used to conduct the heat absorbed by the under-screen support plate 602, so as to improve the heat dissipation performance of the flexible display screen 600.

Understandably, the thickness of the under-screen support plate 602 needs to be made very thin in order to make the flexible display screen 600 or even the electronic device 1000 thin enough and to facilitate the under-screen support plate 602 to be able to change state with the flexible display panel 601 such as bendable. However, due to the dense arrangement of circuits in the flexible circuit board 603, when the flexible circuit board 603 is subjected to excessive pressure, it is very likely to fail. Therefore, it is necessary to increase the thickness of the under-screen support plate 602 to ensure its strength. It is necessary to make a trade-off between the thickness of the lower support plate 602 and the thickness of the flexible display screen 600. In a related art, the under-screen support plate 602 is usually made of stainless steel or titanium sheets. In order to meet the strength requirements for protecting the flexible circuit board 603, the thickness of the under-screen support plate 602 is usually more than 0.15 mm, that is, the under-screen support plate 602 is added in thickness to ensure the reliability of the flexible display screen 600. However, the thickness of the under-screen support plate 602 is too thick, which not only increases the thickness of the flexible display screen 600, but also greatly increases the weight of the flexible display screen 600. In addition, the excessively thick under-screen support plate 602 also affects its own bendable strength makes it more difficult to bend and deform. In view of this, it is necessary to provide a new flexible display screen.

Reference herein to an "embodiment" means that a particular feature, structure, or characteristic described in conjunction with the embodiment can be included in at least one embodiment of the present disclosure. The appearance of the phrase in various places in the specification is not necessarily all referring to the same embodiment, nor is it a separate or alternative embodiment that is mutually exclusive with other embodiments. It is explicitly and implicitly understood by those skilled in the art that the embodiments described herein may be combined with other embodiments.

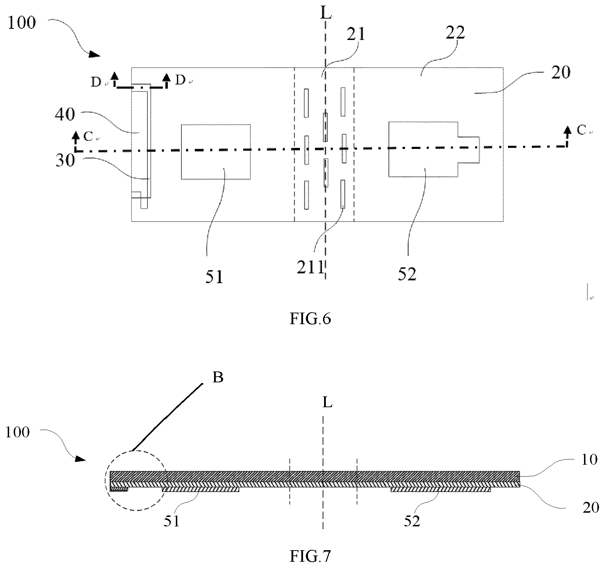

Please refer to FIGS. 6 to 8, FIG. 6 is a schematic bottom view of the flexible display screen in the electronic device shown in FIG. 2, FIG. 7 is a schematic cross-sectional view of the flexible display screen shown in FIG. 6 taken along the line C-C, and FIG . 8 is an enlarged view of the area B shown in Fig. 7.

The embodiment of the present disclosure provides the flexible display screen 100, which may include a flexible display panel 10, an under-screen support plate 20, a support sheet 30, a flexible circuit board 40 and a heat sink 50. The flexible display panel 10 is disposed on a first face of the under-screen support plate 20, and the support sheet 30 and the heat sink 50 are disposed on a second face of the under-screen support plate 20, the first face is opposite to the second face. The flexible circuit board 40 includes a first connecting portion 41 and a second connecting portion 42 arranged in substantial parallel and spaced apart from each other. The first connecting portion 41 is attached to a surface of the support sheet 30 away from the under-screen support plate 20 for electrically connected to the main board 400 of the electronic device 1000. The second connection portion 42 is located between the flexible display panel 10 and the under-screen support plate 20, and the second connection portion 42 is electrically connected to the flexible display panel 10.

The support sheet 30 is attached to the second face of the under-screen support plate 20 away from the flexible display panel 10, and is used to enhance the strength of the under-screen support plate 20 at the corresponding position of the support sheet 30. The support sheet 30 is disposed corresponding to the second connection portion 42 to sufficiently protect the second connection portion 42 of the flexible circuit board 40 to reduce the possibility of the flexible circuit board 40 being damaged.

It can be understood that the support sheet 30 and the heat sink 50 are respectively coupled to the second face of the under-screen support plate 20 away from the flexible display screen 100. Compared with the related art, only the support sheet 30 is added, without increasing the thickness of the under-screen support plate 40, which not only improves the strength of the under-screen support plate 20 corresponding to the position of the second connection part 42, but also does not increase the overall thickness of the flexible display screen 100, and reduces the weight of the flexible display screen 100. That is, without increasing the thickness of the flexible display screen 100, the strength of the under-screen support plate 20 is greatly improved, and the reliability of the flexible circuit board 40 is improved.

The flexible display panel 10 may include a circuit connection area 11, and the circuit connection area 11 is disposed on the side of the flexible display panel 10 facing the first face of the under-screen support plate 20 and at the edge of the flexible display panel 10. The circuit connection area 11 is electrically connected to the first connection portion 41 of the flexible circuit board 40, and is used to realize the transmission of electrical signals between the flexible display panel 10 and the main board 400 of the electronic device 100.

In this embodiment, since the support sheet 30 can improve the structural strength of the under-screen support plate 20 at the corresponding position, the thickness of the under-screen support plate 20 can be appropriately reduced. Specifically, the thickness of the under-screen support plate 20 may be 0.10-012 mm. Compared with the related art, the thickness of the under-screen support plate 20 is approximately reduced by 0.03-0.05 mm, and correspondingly, the weight of the under-screen support plate 20 is reduced by 20-33%. In addition, since the thickness of the under-screen support plate 20 is reduced, the under-screen support plate 20 is more likely to be bent, thereby making the bendable of the flexible display screen 100 more labor-saving. In this embodiment, the material of the under-screen support plate 20 may be stainless steel or titanium alloy, which is not specifically limited herein.

In some embodiments, the under-screen support plate 20 may include a bendable area 21 and a non-bendable area 22 respectively located on both sides of the bendable area 21 and corresponding to the bendable area 21. The bendable area 21 can be bent along the folding line L, so as to drive the non-bendable areas 22 to approach each other, so as to realize the bendable of the flexible display screen 100. The bendable area 21 is provided with a plurality of through-holes 211, or the bendable area 21 may have a grid structure, so as to enhance the bendability of the bendable area 21. The support piece 30 is disposed in the non-bendable area 22 of the under-screen support plate 20.

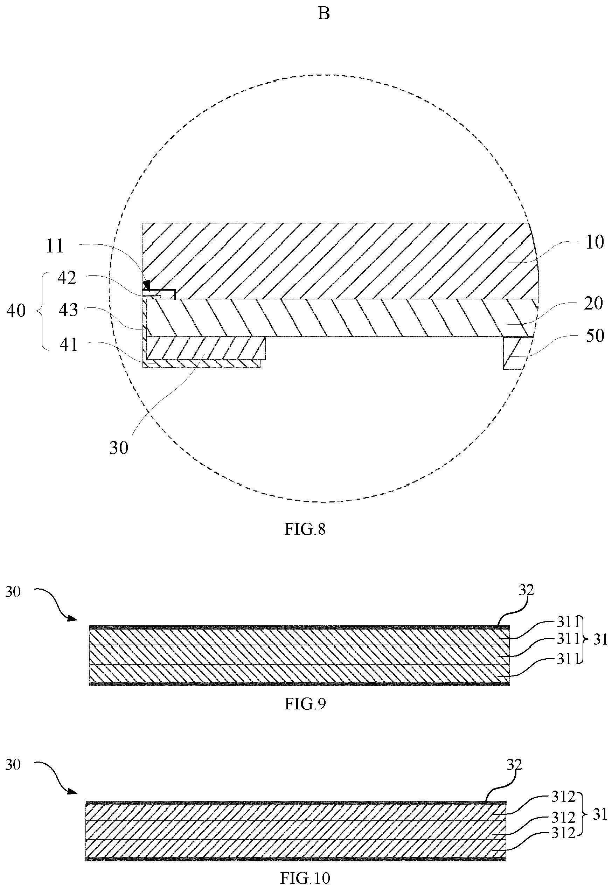

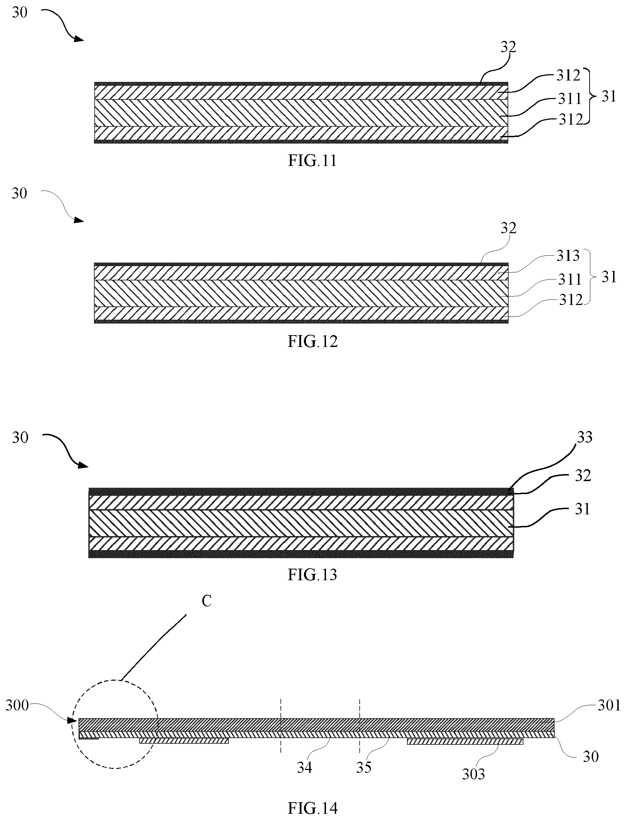

Please refer to FIGS. 9 to 12, FIG. 9 is a schematic cross-sectional view of an embodiment of the support sheet in the flexible display screen shown in FIG. 6 taken along the line D-D, and FIG. 10 is a schematic cross-sectional view of another embodiment of the support sheet in the flexible display screen shown in FIG. 6 taken along the line D-D. FIG. 11 is a schematic cross-sectional view of another embodiment of the support sheet in the flexible display screen shown in FIG.6 taken along the line D-D. FIG.12 is a schematic cross-sectional view of another embodiment of the support sheet in the flexible display screen shown in FIG.6, taken along the line D-D.

The support sheet 30 may include, but is not limited to, a carbon fiber substrate 31 and an epoxy resin adhesive 32 coated on the carbon fiber substrate 31. The carbon fiber substrate 31, also known as carbon fiber cloth, carbon fiber woven cloth, carbon fiber prepreg cloth, carbon fiber reinforcement cloth, carbon cloth, carbon fiber fabric, carbon fiber tape, or carbon fiber sheet, is made of carbon fibers. The carbon fiber has the advantage of high strength, low density, thin thickness, etc. Carbon fiber is mainly composed of carbon elements, and has the characteristics of high temperature resistance, friction resistance, electrical conductivity, thermal conductivity and corrosion resistance. Carbon fiber is fibrous, soft, and can be processed into various fabrics. The carbon fiber has high tensile strength and tensile modulus along it's fiber axis direction. Carbon fiber has the advantages of low density, high specific strength and specific modulus. The main material of the epoxy resin adhesive 32 is epoxy resin. The epoxy resin has excellent physical and mechanical properties, electrical insulation properties, and adhesion properties with various materials, especially adhesion properties with metals.

It can be understood that the carbon fiber substrate 31 can be formed by carbon fibers in different directions. In some embodiments, the carbon fiber substrate 31 can be woven from carbon fiber warp and weft threads. In some embodiments, the warp and weft threads of the carbon fiber substrate 31 form a grid structure. The epoxy resin adhesive 32 is located in the carbon fiber substrate 31 and on the surface of the carbon fiber substrate 31, for bonding the carbon fiber substrate 31 and making the carbon fiber substrate 31 sticky during the formation of the support sheet 30. In some embodiments, the epoxy resin adhesive 32 is located in the grid structure. The direction of the warp threads defines a first direction of the carbon fiber substrate 31, and the direction of the weft threads defines a second direction of the carbon fiber substrate 31; the first direction is different form and angled with the second direction. In some embodiments, the first direction and the second direction are substantially perpendicular to each other. The carbon fibers in the first direction may be the first carbon fibers, and the carbon fibers in the second direction may be the second carbon fibers. The carbon fiber substrate 31 includes the first carbon fibers in the first direction and the second carbon fibers in the second direction. The carbon fiber substrate 31 has carbon fibers in different directions, which can make the carbon fiber substrate 31 have high compressive strength and compressive modulus in different directions. Epoxy resin adhesive 32 in the carbon fiber substrate 31 is used to improve the tensile modulus, flexural modulus and flexural strength of the support sheet 30. The epoxy resin adhesive 32 can be used to make the carbon fiber substrate 31 attached to the under-screen support plate 20, to prevent the carbon fiber substrate 31 from detaching from the screen display support sheet 30 and affect the reliability of the support sheet 30.

The support sheet 30 of the flexible display screen provided by the embodiment of the present disclosure can be formed of a carbon fiber substrate and an epoxy resin adhesive. Due to the preferential orientation of the carbon fiber along the fiber axis, it has high tensile strength and tensile modulus along the fiber axis direction, the carbon fiber substrate is formed of carbon fibers in the first direction and the second direction, and has high tensile strength and tensile modulus in different directions, so the carbon fiber support sheet 30 can have good bendable performance. When applied to foldable flexible displays, the carbon fiber support is well suited to the folding and unfolding requirements of flexible displays without being easily damaged, and have a significant weight advantage over the stainless steel support and titanium support sheet.

In some embodiments, the epoxy resin adhesive 32 can be coated on the surface of the carbon fiber substrate 31 through a coating process and penetrated into the grid structure of the carbon fiber substrate 31, so that the bonding of the epoxy resin adhesive 32 with the carbon fiber substrate 31 can be achieved both for the internal structure of the carbon fiber substrate 31 and for making the surface of the carbon fiber substrate 31 sticky. It can be understood that the epoxy resin adhesive 32 can also penetrate into the grid structure of the carbon fiber substrate 31 through the deposition process and be fully combined with the carbon fiber substrate 31, which can not only realize the bonding of the internal structure of the carbon fiber substrate 31, but also realize the surface of the carbon fiber substrate31sticky. In addition, the epoxy resin adhesive 32 and the carbon fiber substrate 31 can also be bonded by an injection molding process. Specifically, carbon fibers can be cut into short fibers and put into a specified mold, and then epoxy resin can be injected into a specified mold. The adhesive 32 can fully combine the carbon fiber substrate 31 and the epoxy resin adhesive 32 through extrusion injection.

The support sheet 30 is located between the first connecting portion 41 and the under-screen support plate 20 and is respectively bonded and fixed to the first connecting portion 41 and the under-screen support plate 20. In some embodiments, the support sheet 30 is bonded with the first connecting portion 41 and the under-screen support plate 20 by double-sided pressure-sensitive adhesive. In some embodiments, the support sheet 30 is bonded to the under-screen support plate 20 using 3M 9750 pressure sensitive adhesive. The support sheet 30 is bonded to the first connection part 41 using Tesa 61350 adhesive.

Optionally, the thickness of the support sheet 30 is approximately between 0.10-0.15mm, such as 0.10mm, 0.12mm or 0.15mm, which is not limited herein. Specifically, the thickness of the heat sink 50 is approximately between 0.20-0.30 mm. When the second connecting portion 42 of the flexible circuit board 40 and the supporting sheet 30 are stacked and arranged, the thickness of the supporting sheet 30 and the second connecting portion 42 is the same as the thickness of the heat sink 50, which can not only make the force of the under-screen support plate 20 uniform, but also do not increase the thickness of the flexible display screen 100 , and make full use of the existing space of the flexible display screen 100 .

In some embodiments, the support sheet 30 may include at least three layers of carbon fiber substrate 31, that is, the carbon fiber substrate 30 includes at least three carbon fiber substrate layers, and may be four carbon fiber substrate layers, five carbon fiber substrate layers, or the like. Specifically, since the thickness of the single-layer carbon fiber substrate 31 is between 0.025-0.05 mm, if the support sheet 30 has only one or two layers of the carbon fiber substrate 31, the support sheet 30 is easily bent and deformed and has no support. In addition, if the thickness of the single carbon fiber substrate layer is greater than 0.05 mm, the support sheet 30 may also include two carbon fiber substrate layers. In some embodiments, the carbon fiber substrates 31 may include three layers of first carbon fiber substrate layers 311 (as shown in FIG. 9) which includes the first carbon fibers in the first direction. In some embodiments, the carbon fiber substrates 31 may include three layers of second carbon fiber substrate layers 312 (as shown in FIG. 10) which includes the second carbon fibers in the second direction. The first carbon fiber substrate layer 311 is M40 carbon fiber, and the thickness of the single first carbon fiber substrate layer 311 is 0.05 mm; the second carbon fiber substrate layer 312 is T700 carbon fiber, and the thickness of the single-layer second carbon fiber substrate layer 312 is 0.025 mm. The M40 carbon fiber in this embodiment refers to the M40 grade carbon fiber, and the T700 carbon fiber refers to the T700 grade carbon fiber. For details, please refer to the specific parameters in Table 1 below.

In some embodiments, the carbon fiber substrates 31 may include a first carbon fiber substrate layer 311 and a second carbon fiber substrate layer 312 that are stacked together. In some embodiments, the carbon fiber substrates 31 may include at least one first carbon fiber substrate layer 311 and at least two layers of second carbon fiber substrate layers 312 stacked together, wherein any one of the first carbon fiber substrate layer 311 is located between two adjacent layers of the second carbon fiber substrate layers 312 (as shown in FIG 11). Specifically, the first carbon fiber substrate layer 311 may be formed by the first carbon fibers in a first direction, and the second carbon fiber substrate layer 312 may be formed by the second carbon fibers in a second direction; the first direction is different form and angled with the second direction. In some embodiments, the first direction and the second direction are substantially perpendicular to each other.

**Table 1: Performance parameters of the first carbon fiber substrate layer and the second carbon fiber substrate layer**

| Category | First carbon fiber substrate layer | Second carbon fiber substrate layer |
|---|---|---|
| Tensile modulus/G pa | 392 | 230 |
| Tensile strength/M pa | 2740 | 4900 |
| Thickness/mm | 0.05 | 0.025 |
| Density g/cm ³ | 1.80 | 1.81 |

It can be seen from Table 1 that in terms of tensile modulus (elastic deformation and plastic deformation), the first carbon fiber substrate layer 311 > the second carbon fiber substrate layer 312; in terms of tensile strength (hardness), the first carbon fiber substrate 311 layer < the second carbon fiber substrate layer 312; in terms of thickness, the first carbon fiber substrate layer 311>the second carbon fiber substrate layer 312; in terms of density, the first carbon fiber substrate layer 311 and the second carbon fiber substrate layer 312 have little difference.

In some embodiments, the carbon fiber substrates 31 may include a first carbon fiber substrate layer 311 and a second carbon fiber substrate layer 312 and a third substrate 313(as shown in FIG. 12). The third substrate 313 may be formed by the first carbon fibers in a first direction or formed by the second fibers in a second direction. Optionally, the third substrate 313 may be formed by third fibers in a third direction; the third direction is different form and angled with the first and second directions. In some embodiments, the first carbon fiber substrate layer 311 is located between the second carbon fiber substrate layer 312 and a third carbon fiber substrate layer 313, and a thickness of the first carbon fiber substrate layer 311 is greater than the thickness of the second carbon fiber substrate layer 312 and the third carbon fiber substrate layer 313.

In some embodiments, the mass fraction of the epoxy resin adhesive 32 in the support sheet 30 is approximately between 30% and 40%. Specifically, since the carbon fiber substrate 31 has a grad structure and does not have adhesive properties, it is necessary to coat the epoxy resin adhesive 32 on the carbon fiber substrate 31 to increase the viscosity of the carbon fiber substrate 31.

The support sheet 30 can be a first support sheet, a second support sheet and a third support sheet, wherein the first support sheet includes three layers of the first carbon fiber substrate layer 311 and the epoxy resin adhesive 32 with a mass fraction of 40%, and the second support sheet includes three the second carbon fiber substrate layers 312 and the epoxy resin adhesive 32 with a mass fraction of 40%, and the third support sheet includes a layer of the first carbon fiber substrate layer 311, two layers of the second carbon fiber substrate layer 312 and the epoxy resin adhesive 32 with a mass fraction of 40%.

**Table 2: Performance parameters of the first support sheet, the second support sheet and the third support sheet**

| Category | First support sheet | Second support sheet | Third support sheet |
|---|---|---|---|
| Tensile modulus/Gpa | 240 | 135 | 180 |
| Tensile strength/Mpa | 1470 | 2550 | 1860 |
| Thickness/mm | 0.15 | 0.075 | 0.010 |
| Density g/cm³ | 1.61 | 1.60 | 1.60 |

It can be seen from Table 2: in terms of tensile modulus (elastic deformation and plastic deformation), the first support sheet > the third support sheet > the second support sheet, that is, the first support sheet has the highest tensile modulus of the three support sheets. In terms of tensile strength (hardness), the first support sheet < the third support sheet < the second support sheet, that is, the second support sheet has the highest tensile strength of the three support sheets. In terms of thickness, the first supporting sheet > the third supporting sheet support sheet>second support sheet, that is, the second support sheet has the smallest thickness of the three support sheets. In terms of density, there is little difference among the three sheets. Considering comprehensively, the third support sheet has great advantages in tensile modulus, tensile strength and thickness.

Please comprehensively compare Table 1 and Table 2. It can be clearly seen from Table 1 and Table 2 that whether it is the first carbon fiber substrate layer 311 or the second carbon fiber substrate layer 312, when the epoxy resin adhesive 32 is coated on the surface of the carbon fiber, the tensile modulus and tensile strength of the carbon fiber are obviously decreased, so the mass fraction of the epoxy resin adhesive 32 in the support sheet 30 needs to be properly controlled.

If the mass fraction of the epoxy resin adhesive 32 is too large, for example, the mass fraction of the epoxy resin adhesive 32 exceeds 40%, the overall tensile modulus, flexural modulus and flexural strength of the support sheet 30 will be affected. If the mass fraction of the resin adhesive 32 is too small, for example, the mass fraction of the epoxy resin adhesive 32 is less than 30%, the viscosity of the support sheet 30 is insufficient, which affects the reliability of the support sheet 30. Therefore, the mass fraction of the epoxy resin adhesive 32 in the support sheet 30 is preferably between 30% and 40%, for example, the mass fraction of the epoxy resin adhesive 32 in the support sheet 30 may be 30%, 32%, 33%, 34%, 35%, 37%, 39% or 40%, Not to be listed all here.

Further, the mass fraction of the epoxy resin adhesive 32 in the support sheet 30 is between 32% and 34%, and preferably, the mass fraction of the epoxy resin adhesive 32 in the support sheet 30 is 33%. Through the above manner, the tensile modulus, flexural modulus and bending strength of the support sheet 30 can meet the design requirements, and the support sheet 30 can be adhesively connected with the under-screen support plate 20 to ensure the reliability of the support sheet 30.

Optionally, the material of the support sheet may be stainless steel, titanium alloy or the like. In order to ensure the strength of the support sheet, the thickness of the support sheet 30 is between 0.10-0.15 mm. Specifically, please refer to Table 3:

**Table 3: Performance parameter table of carbon fiber support sheet, stainless steel support sheet and titanium alloy support sheet**

| Category | Carbon fiber support sheet | Stainless steel support sheet | Titanium alloy support sheet |
|---|---|---|---|
| Tensile modulus/Gpa | 135-240 | 190-210 | 110-120 |
| Flexural modulus/Gpa | 130-180 | 130-150 | 110-110 |
| Tensile strength/Mpa | 1470-2550 | 600-1500 | 400-1000 |
| Density g/cm ³ | 1.80 | 7.9 | 4.5 |
| Price | Low | Low | high |
| Magnetic | Non-magnetic | Low magnetism after heat treatment | Non-magnetic |

Please refer to Table 2 and Table 3 at the same time, the tensile modulus of the first support sheet in the carbon fiber support sheet is 240Gpa, and the tensile modulus of the third support sheet is 180Gpa, which is similar to the tensile modulus of the stainless steel support sheet of 190-210Gpa , and is much larger than the tensile modulus of the titanium alloy support sheet of 110-120Gpa; the lower limit of the tensile strength of the first support sheet, the second support sheet and the third support sheet 30 in the carbon fiber support sheet is 1470Mpa, which is similar to the upper limit of the tensile strength of the stainless steel supports of 1500Mpa and much greater than the tensile strength of the titanium alloy supports of 1000Mpa. It can be concluded that the tensile modulus and tensile strength of the carbon fiber support sheet are not weaker than or even better than that of the titanium alloy support sheet.

Further, it can be seen from Table 3 that the density of the carbon fiber support sheet is significantly lower than that of the stainless steel support sheet and the titanium alloy support sheet. Taking the stainless steel support sheet and the carbon fiber support sheet with a volume of 138.78mm ³ as an example, the weight of the stainless steel support sheet is 1.08g, while the weight of the carbon fiber is 0.22g, which is 0.86g less than the weight of the stainless steel support sheet. That is, the weight of the carbon fiber support sheet is 79% lower than that of the stainless steel support sheet of the same volume. Similarly, the carbon fiber support sheet is 60% lighter than the titanium alloy support sheet of the same volume.

Furthermore, since the carbon fiber support sheet has no magnetism, it does not need to be demagnetized, which can reduce the processing process. The stainless steel support piece has magnetism, so in order to reduce the influence of the stainless steel magnetism on the precision of the components in the electronic device 100 (for example, the magnet in the camera), the stainless steel support piece needs to be degaussed. But even if the stainless steel support piece is demagnetized, it still has weak magnetic properties. The price of titanium alloy is relatively expensive, and the cost of mass application is high, which is not suitable for large-scale production.

Please refer to FIG. 13. FIG. 13 is a schematic cross-sectional view of another embodiment of the support sheet in the flexible display screen shown in FIG.6 taken along the line D-D.

Optionally, the support sheet 30 may further include a conductive layer 33, and the conductive layer 33 is disposed on the surface of the epoxy resin adhesive 32. The conductive layer 33 is used to ground the static electricity on the under-screen support plate 20 and the support sheet 30 to prevent static electricity from damaging the circuit of the flexible display panel 10 or the flexible circuit board 40.

The conductive layer 33 is deposited on the surface of the epoxy resin adhesive 32 by physical vapor deposition or water plating, so that the conductive layer 33 is uniformly coated on the surface of the epoxy resin adhesive 32.

Specifically, the manufacturing process of the support sheet 30 may include the following operations:
S01, stacking and arranging at least three layers of carbon fiber substrates 31, and coating uniformly the epoxy resin adhesive 32 on the surface of the carbon fiber substrates 31.
S02, hot-pressing the carbon fiber substrate 31 coated with the epoxy resin adhesive 32 to obtain a semi-finished product;
S03, cutting and trimming the semi-finished product to obtain the support sheet 30.

Please refer to FIG 8, in the support sheet 30 provided in the embodiment of the present disclosure, by coating the epoxy resin adhesive 32 on the carbon fiber substrate 31, on the one hand, the support sheet 30has the advantages of high tensile modulus and high tensile strength, and on the other hand, the support sheet 30 has the advantages of high tensile modulus and high tensile strength; in addition, the thickness of the support sheet 30 is 0.10-0.15 mm, so that the thickness of the support sheet 30 is relatively thin.

The flexible circuit board 40 may be approximately in a "U" shape, and the flexible circuit board 40 may further include a third connecting portion 43 connecting the first connecting portion 41 and the second connecting portion 42, and the third connecting portion 43 abuts against the under-screen support plate 20 and the edge of the support sheet 30 for making the flexible circuit board 40 fully fit with the support sheet 30 to improve space utilization.

The heat sink 50 may include a first heat sink 51 and a second heat sink 52, the first heat sink 51 and the second heat sink 52 are respectively disposed on the two non-bendable regions 22, wherein the first heat sink 51 is provided adjacent to the support piece 30. Specifically, the heat sink 50 may be a material with good thermal conductivity, e.g. graphite or copper sheet.

In the flexible display screen 100 provided by the embodiment of the present disclosure, a support sheet 30 is provided between the under-screen support plate 20 and the first connection portion 41 of the flexible display screen 100 to increase the structural strength of the first connection section 41 at the position corresponding to the support piece 30. At the same time, due to the existence of the support sheet 30, the thickness of the under-screen support plate 20 can be appropriately reduced, thereby the thickness and weight of the flexible display screen 100 can be reduced.

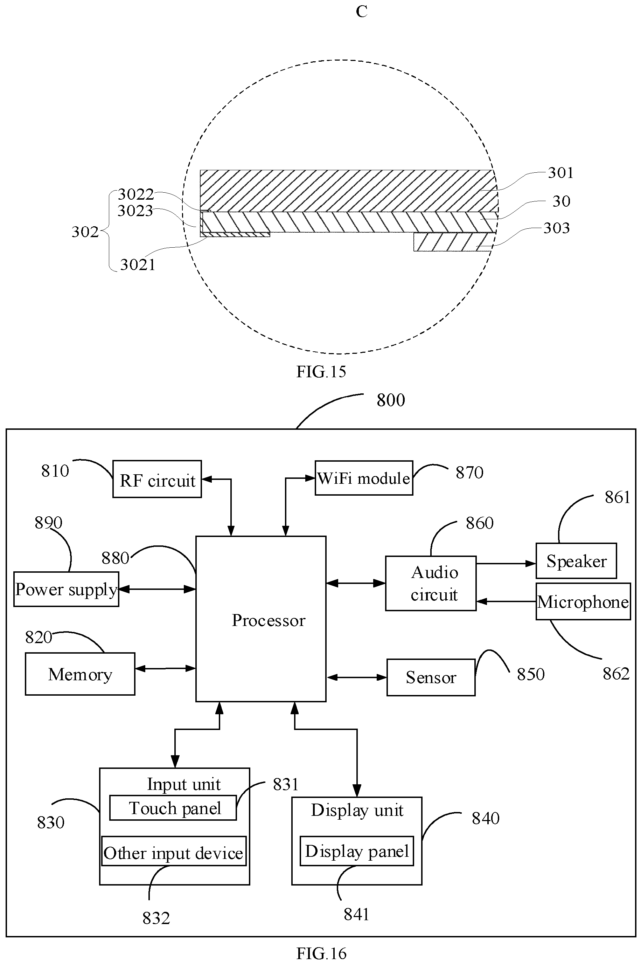

Please refer to FIG. 14 and FIG. 15, FIG. 14 is a schematic cross-sectional view of a flexible display screen taken along the line C-C provided by another embodiment of the present disclosure, and FIG. 15 is an enlarged view of the area C shown in FIG. 14.

The embodiment of the present disclosure further provides a flexible display screen 300, and the flexible display screen 300 may include a flexible display panel 301, a support sheet 30, a flexible circuit board 302 and a heat sink 303. The flexible display panel 301, the support sheet 30 and the heat sink 303 are stacked in sequence, wherein the shape of the support sheet 30 corresponds to the shape of the flexible display panel 301, so that the support sheet 30 can fully contact the flexible display panel 301 and support and protect the flexible display panel 301. The support sheet 30 is a carbon fiber support sheet 30.

The support sheet 30 of the flexible display screen provided by the embodiments of the present application may be formed of a carbon fiber substrate 31and an epoxy resin adhesive 32. Specifically, the carbon fiber substrate 31 may be formed of carbon fibers in different directions. The carbon fiber substrate includes the first carbon fibers in the first direction and the second carbon fibers in the second direction. The carbon fiber substrate thus formed has carbon fibers in different directions, which can make the carbon fiber substrate have high tensile strength and resistance in different directions. In some embodiments, the carbon fiber substrate 31 may be at least three carbon fiber substrate layers, and the at least three carbon fiber substrate layers may include a first carbon fiber substrate layer 311 and a second carbon fiber substrate layer 312 that are stacked in sequence. Specifically, the first carbon fiber substrate layer 311 may be formed by first carbon fibers in a first direction, and the second carbon fiber substrate layer 312 may formed by second carbon fibers in a second direction, the first direction is different form and angled with the second direction. In some embodiments, the first direction and the second direction are substantially perpendicular to each other. The flexible display screen support sheet 30 provided in the embodiment of the present application contacts and supports the flexible display panel, and when applied to foldable electronics, it can well satisfy the folding and unfolding of the flexible display screen without being easily damaged. It has great advantages in weight for stainless steel support pieces and titanium alloy support pieces.

The support sheet 30 may include a bendable area 34 and a non-bendable area 35 respectively located on both sides of the bendable area 34 and corresponding to the bendable area 34. The bendable area 34 can be bent along the folding line L, so as to drive the non-bendable areas 35 to approach each other, so as to realize the bendable of the flexible display screen 300.The bendable area 34 may have a grid structure, or a plurality of through holes (not shown) to enhance the bendability of the bendable area 34. The number of heat sink 303 is two and corresponds to the two non-bendable regions 35 respectively.

The flexible circuit board 302 may be approximately in a "U" shape and include a first connecting part 3021 and a second connecting part 3022 arranged in parallel and spaced apart, and a third connecting part 3023 connecting the first connecting part 3021 and the second connecting part 3022. The first connecting part 3021 is attached to the surface of the support sheet 30 away from the flexible display panel 301, and is used to electrically connect the first connection part 3021 with the main board 400 of the electronic device 100; the second connection part 3022 is located between the flexible display panel 301 and the support sheet 30, and the second connection portion 3022 is electrically connected to the flexible display panel 301.

The heat sink may include a first heat sink 303 and a second heat sink 303. The first heat sink 303 and the second heat sink 303 are respectively disposed on the two non-bendable areas 35, wherein the first heat sink 303 is provided adjacent to the support sheet 30. Specifically, the heat sink 303 may be a material with good thermal conductivity, e.g. graphite or copper sheet.

Please refer to FIG. 16, which is a schematic structural diagram of an electronic device provided by an embodiment of the present disclosure.

Of course, the present disclosure can also provide an electronic device 800, the electronic device 800 includes an RF circuit 810, a memory 820, an input unit 830, a display unit 840, a sensor 850, an audio circuit 860, a WiFi module 870, a processor 880, and a power supply 880 etc. The RF circuit 810, the memory 820, the input unit 830, the display unit 840, the sensor 850, the audio circuit 860 and the WiFi module 870 are respectively connected to the processor 880. The power supply 880 is used to provide electrical power to the entire electronic device 100.

Specifically, the RF circuit 810 is used to transmit and receive signals; the memory 820 is used to store data instruction information; the input unit 830 is used to input information, which may specifically include a touch panel 831 and other input devices 832 such as operation keys; the display unit 840 may include a display panel 841, etc. The sensor 850 include infrared sensor, laser sensor, etc. for detecting user proximity signals and distance signals, etc. The speaker 861 and the microphone (or microphones) 862 are connected to the processor 880 via the audio circuit 860 for receiving and transmitting sound signals. The WiFi module 870 is used to receive and transmit WiFi signals, and the processor 880 is used to process the data information of the electronic device.

The above descriptions are only part of the embodiments of the present disclosure, and are not intended to limit the protection scope of the present disclosure. Any equivalent device or equivalent process transformation made by using the contents of the description and drawings of the present disclosure, or directly or indirectly applied to other related technical field is similarly included in the scope of patent protection of this disclosure.

## Claims

1. A support sheet (30) for a flexible display screen (100,300), comprising:
a carbon fiber substrate (31), the carbon fiber substrate (31) comprising first carbon fibers in a first direction and second carbon fibers in a second direction; wherein the first direction being different from and angled with the second direction; and
epoxy resin adhesive (32) for holding the first and the second carbon fibers in the carbon fiber substrate (31).

2. The support sheet (30) according to claim 1, wherein the first direction being perpendicular to the second direction.

3. The support sheet (30) according to claim 1 or 2, wherein the carbon fiber substrate (31) comprises at least two carbon fiber substrate layers, and the at least two carbon fiber substrate layers comprise a first carbon fiber substrate layer (311) and a second carbon fiber substrate layer (312) that are stacked in sequence, wherein, the first carbon fiber substrate layer (311) is formed by the first carbon fibers, and the second carbon fiber substrate layer (312) is formed by the second carbon fibers.

4. The support sheet (30) according to claim 1 or 2, wherein the carbon fiber substrate (31) comprises at least three carbon fiber substrate layers, and the at least three carbon fiber substrate layers comprise a first carbon fiber substrate layer (311) and a second carbon fiber substrate layer (312) that are stacked in sequence, wherein the first carbon fiber substrate layer (311) is formed by the first carbon fibers, and the second carbon fiber substrate layer (312) is formed by the second carbon fibers.

5. The support sheet (30) according to any of claims 1-4, wherein a tensile modulus of the first carbon fiber substrate layer (311) is greater than the tensile modulus of the second carbon fiber substrate layer (312), and a tensile strength of the first carbon fiber substrate layer (311) is less than the tensile strength of the second carbon fiber substrate layer (312).

6. The support sheet (30) according to any of claims 1-4, wherein, the first carbon fiber substrate layer (311) and the second carbon fiber substrate layer (312) have a same tensile modulus and a same tensile strength.

7. The support sheet (30) according to claim 4, wherein the first carbon fiber substrate layer (311) is located between the second carbon fiber substrate layer (312) and a third carbon fiber substrate layer (313), and a thickness of the first carbon fiber substrate layer (311) is greater than the thickness of the second carbon fiber substrate layer (312) and the third carbon fiber substrate layer (313).

8. The support sheet (30) according to any of claims 1-7, wherein the support sheet (30) has a bendable area (34) and a non-bendable area (35), wherein the bendable area (34) has multiple through-holes (211).

9. The support sheet (30) according to any of claims 1-7, wherein the mass fraction of the epoxy resin adhesive (32) in the carbon fiber substrate (31) is 30% - 40%.

10. The support sheet (30) according to any of claims 1-7, wherein the support sheet (30) further comprises a conductive layer (33), and the conductive layer (33) is disposed on a surface of the carbon fiber substrate (31).

11. A flexible display screen (100,300), comprising:
a flexible display panel (10,301);
a support sheet (30) according to any of claims 1 to 10, the support sheet (30) comprising a first face and a second face opposite to the first face, the first face being coupled to a non-display surface of the flexible display panel (10,301); and
a flexible circuit board (40,302), comprising a first portion (41,3021) and a second portion (42,3022), the first portion (41,3021) being electrically connected to the flexible display panel (10,301), the second portion (42,3022) being attached to the second face of the support sheet (30);

12. The flexible display screen (100,300) according to claim 11, wherein the flexible display screen (100) has a heat sink (50,303), and the heat sink (50,303) is disposed in the non-bendable area (35) on the side of the support sheet (30) facing away from the flexible display panel (10, 301).

13. An electronic device (1000), comprising:
a flexible display panel (10,301);
a support sheet (30) according to any of claims 1 to 10, the support sheet (30) being coupled to a non-display surface of the flexible display panel (10,301);
a main board (400);
a flexible circuit board (40,302), one portion of the flexible circuit board (40,302) being electrically connected to the flexible display panel (10,301), and another portion of the flexible circuit board (40,302) being attached to a side of the support sheet (30) away from the flexible display panel (10,301), wherein the flexible display panel (10,301) is electrically connected to the main board (400) through the flexible circuit board (40,302).

14. The electronic device (1000) according to claim 13, wherein the flexible circuit board (40,302), comprising a first portion (41,3021) and a second portion (42,3022), the first portion (41,3021) being electrically connected to the flexible display panel (10,301), the second portion (42,3022) being attached to the second face of the support sheet (30);

15. The electronic device (1000) according to claim 13, wherein electronic device (1000) has a heat sink (50,303), and the heat sink (50,303) is disposed in the non-bendable area (35) on the side of the support sheet (30) facing away from the display panel (10,301).
